# EUROPEAN PATENT APPLICATION

(11) **EP 4 782 370 A1**
(43) Date of publication of application: **29.07.2026**
(21) Application number: 26152434.2
(22) Date of filing: 16.01.2026
(51) Int. Cl.: B65G 1/137, G06Q 10/087

(54) **ARTICLE SHIPMENT SYSTEM**

(30) Priority: 23.01.2025 JP 2025009779
(71) Applicant: Daifuku Co., Ltd., Osaka-shi, Osaka 555-0012 (JP)
(72) Inventor: SAGA, Jun, Tokyo, 1050022 (JP); YOSHIDA, Masaru, Tokyo, 1050022 (JP); TAKAI, Ryousuke, Tokyo, 1050022 (JP); ODA, Ryohei, Tokyo, 1050022 (JP); UEDA, Tomoaki, Tokyo, 1050022 (JP); TANIGUCHI, Seiki, Tokyo, 1050022 (JP); KATAYAMA, Yuji, Tokyo, 1050022 (JP); SATO, Nobuhiko, Tokyo, 1050022 (JP); UKISU, Kenichi, Tokyo, 1050022 (JP); IMURA, Kyosuke, Tokyo, 1050022 (JP)
(74) Representative: Grosse, Felix Christopher

(57) **Abstract**

An article shipment system 100 includes an automated warehouse 1, a picking area 2, a consolidation area 4, and a control system 5. The control system 5 alternately provides, to the automated warehouse 1, a transfer command to transfer a target mount with a higher picking workload from the automated warehouse 1 and a transfer command to transfer a target mount with a lower picking workload from the automated warehouse 1 to transport multiple first mounts to the picking area 2. The target mount is a first mount, among the first mounts, loaded with articles of a specified type included in a target article-specific order information group. The target article-specific order information group is a group of pieces of article-specific order information included in part of multiple pieces of order information among pieces of article-specific order information included in the multiple pieces of order information.

## Description

The present invention relates to an article shipment system for shipping articles of specified types and specified quantities specified by order information.

An example of the above article shipment system is described in JP 398 2421 B2. In the background described hereafter, reference signs in parentheses are the reference signs in JP 398 2421 B2. The system described in JP 398 2421 B2 includes an automated warehouse (8) that stores pallets (1) loaded with articles, a shipment station (11) at which picking operations are performed on pallets (1) transferred from the automated warehouse (8), an automated warehouse controller (22) that controls the automated warehouse (8), a central controller (21), and a management computer (25).

The central controller (21) receives, from the management computer (25), command shipment data pieces (refer to Fig. 4 in JP 398 2421 B2) specifying article names and picking quantities. The central controller (21) rearranges the command shipment data pieces. More specifically, as shown in Fig. 6 in JP 398 2421 B2, the central controller (21) rearranges the command shipment data pieces to alternately arrange a data piece with a larger picking quantity and a data piece with a smaller picking quantity. The central controller (21) then outputs, in the rearranged order, the command shipment data pieces to the automated warehouse controller (22) as transfer command data. In response to the transfer command data, the automated warehouse controller (22) controls the automated warehouse (8) to transfer the pallets (1) from the automated warehouse (8).

To avoid repeated transfer of a mount loaded with articles of a type (hereafter referred to as a first mount) from the automated warehouse, the picking operations may be performed simultaneously for articles of the same specified type across multiple pieces of order information when the first mount loaded with such articles is transferred from the automated warehouse. To simultaneously perform the picking operations associated with multiple pieces of order information, articles retrieved from the first mount are loaded onto a mount corresponding to a piece of order information (hereafter referred to as a second mount), and the second mount is stored until the loading is complete for all second mounts associated with the above piece of order information. When the loading is complete for all the second mounts associated with the single piece of order information, the articles on all these second mounts are collected onto a mount corresponding to the shipping destination specified by the piece of order information.

To simultaneously perform the picking operations associated with multiple pieces of order information, the second mounts are to be temporarily stored in, for example, a storage rack until the loading is complete for all the second mounts associated with a single piece of order information. A long wait time may occur before the loading is complete for all the second mounts associated with the single piece of order information. This is likely to cause a shortage of space for temporarily storing the second mounts (for example, an empty shelf in the storage rack). To avoid this, the space for storing the second mounts may be increased. **In** particular, when the picking operations associated with multiple pieces of order information are performed simultaneously, the rearrangement of the picking operations is likely to involve a longer wait time. More specifically, for example, when the command shipment data pieces are rearranged based on the picking quantity as in JP 398 2421 B2, the picking operations are likely to occur at different times for articles of the multiple specified types included in the single piece of order information, involving a longer wait time.

Techniques are awaited for performing the picking operations associated with multiple pieces of order information simultaneously using less space for temporarily storing the second mounts loaded with articles retrieved from first mounts in the picking operations.

An article shipment system according to an aspect of the present invention is an article shipment system for shipping articles of specified types and specified quantities based on order information. The specified types and the specified quantities are specified by the order information. The specified types are types of articles specified for each shipping destination. The specified quantities are each a quantity of articles specified for each of the specified types. The article shipment system includes an automated warehouse, a picking area, a consolidation area, and a control system. The automated warehouse stores a plurality of first mounts each loaded with a plurality of articles. The picking area is an area in which a picking operation is performed. The picking operation is an operation of retrieving, based on the order information, articles of specified types and specified quantities indicated by respective pieces of article-specific order information from the plurality of first mounts and loading the articles onto second mounts corresponding to the respective pieces of article-specific order information. Each of the pieces of article-specific order information is information about a single specified type and a specified quantity for the single specified type included in a single piece of order information. The consolidation area is an area in which a consolidation operation is performed. The consolidation operation is an operation of collecting, onto a third mount corresponding to a shipping destination, articles loaded on second mounts associated with all pieces of article-specific order information included in a single piece of order information. The control system controls the automated warehouse. The control system alternately provides, to the automated warehouse, a transfer command to transfer a target mount with a higher picking workload from the automated warehouse and a transfer command to transfer a target mount with a lower picking workload from the automated warehouse to transport the plurality of first mounts to the picking area. The picking workload is a workload for retrieving, from a first mount among the plurality of first mounts, articles in specified quantities indicated by pieces of article-specific order information included in a plurality of pieces of order information in the picking operation. The target mount is a first mount, among the plurality of first mounts, loaded with articles of a specified type included in a target article-specific order information group. The target article-specific order information group is a group of pieces of article-specific order information included in part of the plurality of pieces of order information among pieces of article-specific order information included in the plurality of pieces of order information.

In this structure, the control system alternately provides, to the automated warehouse, the transfer command to transfer a first mount with a higher picking workload from the automated warehouse and the transfer command to transfer a first mount with a lower picking workload from the automated warehouse to transport the multiple first mounts to the picking area. This allows the multiple first mounts to arrive in the picking area substantially in an alternating order of a first mount with a higher picking workload and a first mount with a lower picking workload. This can easily level the workloads over time in the picking area and improve the work efficiency in the picking area. With the multiple first mounts arriving in the picking area in the order described above, the number of first mounts transported from the picking area after completion of the picking operation can also be leveled over time. This can easily reduce congestion of the transport path for the first mounts (for example, a path for re-transfer into the automated warehouse).

In the above structure, the first mounts as the targets of the above alternating transfer commands provided to the automated warehouse are limited to the first mounts (target mounts) loaded with articles of the specified types included in the target article-specific order information group. The target article-specific order information group is a group of pieces of article-specific order information included in part of the multiple pieces of order information among the pieces of article-specific order information included in the multiple pieces of order information. Thus, the types of articles to be transported into the picking area in response to the above transfer commands can be limited to the specified types included in part of the multiple pieces of order information. This facilitates the completion of loading on the second mounts associated with part of the multiple pieces of order information, as compared with a structure without such limitation on the types of articles to be transported into the picking area. This reduces the space to be used for temporarily storing the second mounts.

The structure described above can perform the picking operations associated with multiple pieces of order information simultaneously using less space for temporarily storing the second mounts loaded with articles retrieved from the first mounts in the picking operations.

Further features and advantages of the article shipment system according to the present invention will become apparent from the following description of the embodiments described with reference to the drawings.
- Fig. 1: is a conceptual block diagram of an article shipment system according to an embodiment of the present invention;
- Fig. 2: is a table showing multiple pieces of order information in an example;
- Fig. 3: is a diagram illustrating procedures in the article shipment system;
- Fig. 4: is a table showing picking workloads;
- Fig. 5: is a diagram illustrating the assignment of the destinations of first mounts to workstations;
- Fig. 6: is a diagram illustrating the assignment of the destinations of first mounts to workstations; and
- Fig. 7: is a diagram illustrating the assignment of the destinations of first mounts to workstations.

An article shipment system according to one or more embodiments according to the present invention will now be described with reference to the drawings. The various technical features of the article shipment system described herein are also applicable to an article shipment method for shipping articles or an article shipment program for shipping articles (specifically, an article shipment program for causing a computer to function as a control system in an article shipment system). The article shipment method and the article shipment program, as well as a recording medium (for example, a computer-readable recording medium such as an optical disc or a flash memory) recording the article shipment program, are also described herein.

An article shipment system 100 ships articles 20 of specified types (categories) and specified quantities based on order information. The specified types and the specified quantities are specified by the order information. The specified types are the types of articles 20 specified for each shipping destination. Each specified quantity is the quantity of articles 20 specified for each specified type. The order information is generated by a control system 5 (described later), or is generated by another device that can communicate with the control system 5 (for example, a management device as a host device of the control system 5) and provided to the control system 5. The order information is generated based on, for example, orders from the shipping destinations of articles 20.

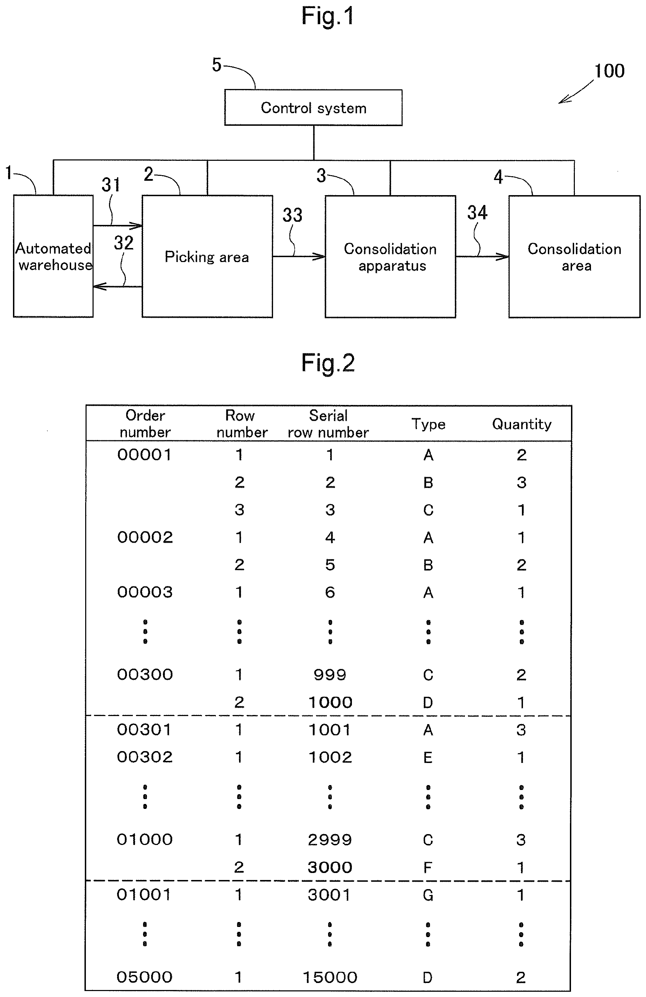

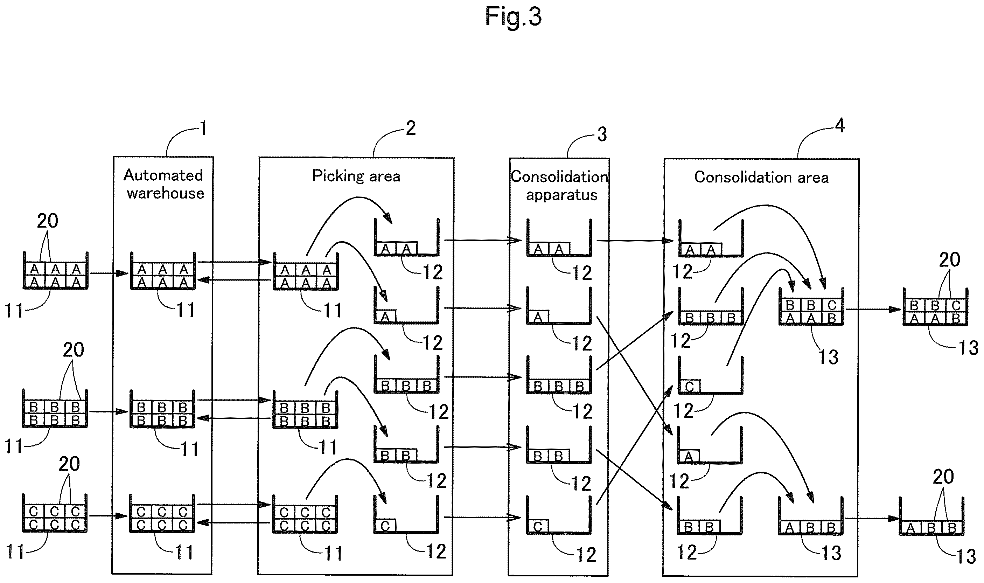

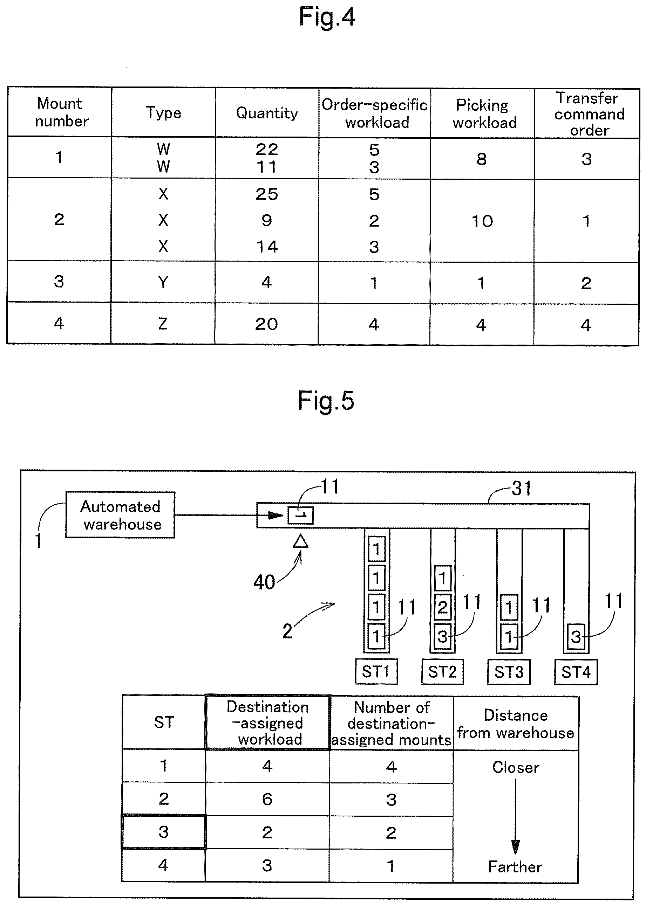

An example of order information is shown in Fig. 2. In Fig. 2 and in Figs. 3 and 4 (referred to later), the types of articles 20 are indicated by alphabets. In Fig. 3, the alphabets indicating the types of articles 20 are each shown in a square representing the corresponding article 20. The types of articles 20 are identified based on, for example, minimum management units (stock keeping units or SKUs) of the articles 20.

In the present embodiment, the article shipment system 100 manages multiple pieces of order information aggregated in batches. Fig. 2 shows multiple pieces of order information included in a single batch. In Fig. 2, the order number identifies the multiple pieces of order information. In the example shown in Fig. 2, the single batch includes 5000 pieces of order information. In Fig. 2, the multiple rows each indicate a piece of article-specific order information. Each piece of article-specific order information refers to information about a single specified type and a specified quantity for the single specified type. In the example shown in Fig. 2, the single batch includes 15000 pieces of article-specific order information. Each piece of article-specific order information includes information about a specified type shown in the column of type and information about a specified quantity shown in the column of quantity.

A single piece of order information includes one or more pieces of article-specific order information (specifically, pieces of article-specific order information as many as the specified types included in the single piece of order information). For example, the order information with the order number 00001 includes the article-specific order information with the specified type A and the specified quantity 2, the article-specific order information with the specified type B and the specified quantity 3, and the article-specific order information with the specified type C and the specified quantity 1. In Fig. 2, the row number identifies one or more pieces of article-specific order information included in a single piece of order information. The serial row number identifies multiple pieces of article-specific order information (in this example, 15000 pieces of article-specific order information) included in a single batch.

As shown in Fig. 1, the article shipment system 100 includes an automated warehouse 1, a picking area 2, a consolidation area 4, and the control system 5. In the present embodiment, the article shipment system 100 further includes a consolidation apparatus 3, a first transporter 31, a second transporter 32, a third transporter 33, and a fourth transporter 34. The control system 5 controls the automated warehouse 1. In the present embodiment, the control system 5 further controls a device (for example, a monitor or a robot) installed in the picking area 2, a device (for example, a monitor or a robot) installed in the consolidation area 4, the consolidation apparatus 3, the first transporter 31, the second transporter 32, the third transporter 33, and the fourth transporter 34. The first transporter 31, the second transporter 32, the third transporter 33, and the fourth transporter 34 may be, for example, conveyors such as belt conveyors or roller conveyors, or transport vehicles such as automated guided vehicles.

The control system 5 includes an arithmetic processor such as a microcomputer, and a peripheral circuit such as a memory. The functions of the control system 5 are implemented by hardware such as the arithmetic processor cooperating with a program executed on the hardware. The control system 5 may be implemented by a single device (for example, a computer such as a personal computer or a workstation) or by multiple devices that can communicate with one another (for example, a control device as a host device and a control device as a client device).

The automated warehouse 1 stores multiple first mounts 11 each loaded with multiple articles 20. The automated warehouse 1 stores articles 20 on the first mounts 11 as the inventory. As shown in the left end of Fig. 3, the articles 20 delivered and loaded on the first mounts 11 are transferred into the automated warehouse 1 to replenish the inventory. The control system 5 generates and manages inventory data of the articles 20. For example, the inventory data includes, in an associated manner, identification information (type information) of the articles 20 and information about the storage locations of the articles 20. The inventory data may also include, in an associated manner, identification information of the first mounts 11, identification information (type information) of the articles 20 on the first mounts 11, and information about the storage locations of the first mounts 11. In the present embodiment, as shown in Fig. 3, each first mount 11 is loaded with articles 20 of a single type. In some embodiments, one or more of the first mounts 11 may each be loaded with articles 20 of multiple types.

In Fig. 3, the first mounts 11, second mounts 12 (described later), and third mounts 13 (described later) are containers for containing articles 20, such as collapsible containers or cardboard boxes. The first mounts 11, the second mounts 12, and the third mounts 13 may be mounts other than containers, such as pallets or bags. The bags include, for example, looped bag bodies to contain articles 20 and are transported and stored while being hung on, for example, hangers.

Two or three of the first mount 11, the second mount 12, or the third mount 13 may be of the same type, or all these mounts may be of different types. The first mount 11, the second mount 12, and the third mount 13 are at least conceptually distinguished from one another. For example, a mount used as the first mount 11 may be used as the second mount 12 in picking operations (described later). A mount used as the second mount 12 may be used as the third mount 13 in a consolidation operation (described later).

The automated warehouse 1 automatically transfers the first mounts 11 into and from the automated warehouse 1. The first mounts 11 are transferred into the automated warehouse 1 through an entrance section and are transferred from the automated warehouse 1 through an exit section. In the example shown in Fig. 1, the connection between the automated warehouse 1 and the first transporter 31 is the exit section. The connection between the automated warehouse 1 and the second transporter 32 is the entrance section. Although not shown, the automated warehouse 1 includes a storage (for example, a storage rack with multiple shelves) that stores the first mounts 11 and a transporter that transports the first mounts 11 between the storage and the entrance section and between the storage and the exit section. The automated warehouse 1 may include, for example, a stacker crane or a shuttle cart as the transporter.

The automated warehouse 1 is controlled by the control system 5. The control system 5 provides a transfer command to the automated warehouse 1 to transfer a first mount 11 from the automated warehouse 1. In response to the transfer command from the control system 5, a controller (automated warehouse controller) controls the automated warehouse 1 to transfer, from the automated warehouse 1, the first mount 11 specified by the transfer command. The controller that controls the automated warehouse 1 may be part of the control system 5. In this case, the control system 5 includes a commander that provides the transfer command to the controller in the control system 5 to control the automated warehouse 1.

The controller starts controlling the automated warehouse 1 to transfer a first mount 11 from the automated warehouse 1 in response to the transfer command specifying the first mount 11. The first mounts 11 are transferred from the automated warehouse 1 basically in the same order as the order in which the transfer commands for the first mounts 11 are provided. For a particular structure of the automated warehouse 1, however, the first mounts 11 may be transferred from the automated warehouse 1 in an order that is not exactly the same as the order in which the transfer commands for the first mounts 11 are provided, although being substantially the same as such an order. For example, the automated warehouse 1 may include multiple automated warehouse sections at different distances from the exit section. In this case, for example, a first mount 11 specified by an earlier transfer command may be stored in an automated warehouse section away from the exit section, or may be stored at a location in an automated warehouse section at which the first mount 11 takes a long time to move out of the section. In such cases, a first mount 11 specified by a later transfer command may be transferred from the exit section earlier than a first mount 11 specified by an earlier transfer command.

In the picking area 2, the picking operations are performed. The picking operations are operations of retrieving, based on the order information, articles 20 of the specified types and the specified quantities indicated by the respective pieces of article-specific order information from the first mounts 11 and loading the articles 20 onto the second mounts 12 corresponding to the respective pieces of article-specific order information. The picking operations may be performed by an operator, a robot such as an articulated robot, or both the operator and the robot. When the picking operations are performed by the operator, the picking area 2 includes, for example, a monitor that displays instructions to the operator (for example, the quantities of articles 20 to be retrieved). The picking operations will be described in detail later with reference to Fig. 3.

In the present embodiment, first mounts 11 transferred from the automated warehouse 1 are transported into the picking area 2 by the first transporter 31. First mounts 11 for which the picking operations are complete (specifically, first mounts 11 from which articles 20 have been retrieved in the picking operations) are transported from the picking area 2 into the automated warehouse 1 by the second transporter 32. The first transporter 31 transports multiple first mounts 11 into the picking area 2 in the order in which the first mounts 11 are transferred from the automated warehouse 1. More specifically, the first transporter 31 cannot change the order in which the first mounts 11 are transported (cannot rearrange the first mounts 11). The first mounts 11 thus arrive in the picking area 2 in the same order as the order in which the first mounts 11 are transferred from the automated warehouse 1. The first transporter 31 and the second transporter 32 are at least conceptually distinguished from each other. The first transporter 31 and the second transporter 32 may be the same device.

The second mounts 12 on which articles 20 are to be loaded in the picking operations (empty second mounts 12 with no articles 20 loaded in this example) are transported into the picking area 2. The control system 5 manages a second mount 12 loaded with articles 20 of the specified type and the specified quantity indicated by a piece of article-specific order information in the picking operations as a second mount 12 corresponding to the piece of article-specific order information. In the present embodiment, each second mount 12 is loaded with articles 20 of the specified type and the specified quantity indicated by a single piece of article-specific order information. A single piece of article-specific order information is thus associated with a single second mount 12. In some embodiments according to the present invention, one or more of the second mounts 12 may each be loaded with articles 20 of the specified types and the specified quantities indicated by multiple pieces of article-specific order information included in a single piece of order information. Multiple pieces of article-specific order information included in a single piece of order information may be associated with a single second mount 12. The second mount 12 is transported into the picking area 2 by, for example, a transporter (not shown) or an operator.

Although described in detail later, the picking operations associated with multiple pieces of order information are performed simultaneously for the first mounts 11 transported into the picking area 2. A second mount 12 associated with a piece of order information loaded with articles 20 in the picking operations is stored in the consolidation apparatus 3 until the loading is complete for all the second mounts 12 associated with the above piece of order information. In other words, in the present embodiment, the space in the consolidation apparatus 3 for storing the second mounts 12 serves as a space for temporarily storing the second mounts 12. When all the second mounts 12 associated with a single piece of order information (specifically, the second mounts 12 associated with all pieces of article-specific order information included in a single piece of order information) have been transported into the consolidation apparatus 3, all the second mounts 12 associated with the single piece of order information are then transported out of the consolidation apparatus 3. In the present embodiment, the third transporter 33 is used to transport the second mounts 12 from the picking area 2 into the consolidation apparatus 3 after the second mounts 12 are loaded with articles 20 in the picking operations. In the present embodiment, the fourth transporter 34 is used to transport the second mounts 12 from the consolidation apparatus 3 into the consolidation area 4.

The consolidation apparatus 3 stores multiple second mounts 12. The consolidation apparatus 3 can transport the stored second mounts 12 out of the consolidation apparatus 3 in any order. More specifically, the consolidation apparatus 3 can transport the second mounts 12 out of the consolidation apparatus 3 in an order different from the order in which the second mounts 12 are transported into the consolidation apparatus 3. The consolidation apparatus 3 can adjust the order of multiple second mounts 12 to arrange the second mounts 12 for each mount group, and can transport the second mounts 12 out of the consolidation apparatus 3 in the adjusted order. The mount group refers to a group of all the second mounts 12 associated with a single piece of order information.

The consolidation apparatus 3 is, for example, a warehouse similar to the automated warehouse 1. In this case, the consolidation apparatus 3 includes a storage (for example, a storage rack with multiple shelves) that stores the second mounts 12 and a transporter that transports the second mounts 12 between the storage and an entrance section (carry-in section) of the consolidation apparatus 3 and between the storage and an exit section (carry-out section) of the consolidation apparatus 3. The consolidation apparatus 3 may include a transporter that transports the second mounts 12 between the carry-in section and the carry-out section. The second mounts 12 may be stored in part of a transport path (for example, a circular path) of the transporter for the second mounts 12.

In the consolidation area 4, the consolidation operation is performed. The consolidation operation is an operation of collecting articles 20 from the second mounts 12 associated with all pieces of article-specific order information included in a single piece of order information onto the third mount 13 corresponding to the shipping destination. The consolidation operation may be performed by an operator, a robot such as an articulated robot, or both the operator and the robot. When the consolidation operation is performed by the operator, the consolidation area 4 includes, for example, a monitor that displays instructions to the operator. The consolidation area 4 is at least conceptually distinguished from the picking area 2. The consolidation area 4 may at least partially overlap the picking area 2. The consolidation operation will be described in detail later with reference to Fig. 3.

The third mounts 13 on which articles 20 are to be loaded in the consolidation operation (empty third mounts 13 with no articles 20 loaded in this example) are transported into the consolidation area 4. The third mounts 13 loaded with articles 20 in the consolidation operation are transported to, for example, a shipping area (not shown) in which a shipping operation (for example, sorting for shipping) is performed. The shipping area is, for example, adjacent to a truck berth. The third mounts 13 are transported into and from the consolidation area 4 by, for example, a transporter (not shown) or an operator.

Fig. 3 shows procedures in the article shipment system 100. Fig. 3 focuses on two pieces of order information, or specifically, the order information with the order number 00001 and the order information with the order number 00002 in Fig. 2, and shows procedures for performing the picking operations associated with these two pieces of order information simultaneously. The piece of order information with the order number 00001 is hereafter referred to as order information (00001). The piece of order information with the order number 00002 is referred to as order information (00002). An article 20 with the type A is referred to as an article 20(A). An article 20 with the type B is referred to as an article 20(B). An article 20 with the type C is referred to as an article 20(C).

As shown in Fig. 2, the picking operations associated with the order information (00001) involve two articles 20(A), three articles 20(B), and one article 20(C). The picking operations associated with the order information (00002) involve one article 20(A) and two articles 20(B). More specifically, the picking operations associated with these two pieces of order information involve three articles 20(A), five articles 20(B), and one article 20(C). Thus, a first mount 11 loaded with three or more articles 20(A), a first mount 11 loaded with five or more articles 20(B), and a first mount 11 loaded with one or more articles 20(C) are transported from the automated warehouse 1 into the picking area 2. In Fig. 3, the quantities of articles 20 on the first mounts 11 are not the exact quantities.

In this example, a first mount 11 loaded with articles 20 of the type and quantity involved in the picking operations is stored in the automated warehouse 1. However, such a first mount 11 may not be stored in the automated warehouse 1. In this case, multiple first mounts 11 loaded with articles 20 of the same type are transported from the automated warehouse 1 into the picking area 2 to provide articles 20 in a total quantity of greater than or equal to the quantity involved in the picking operations.

In the picking area 2, each first mount 11 undergoes the picking operations for retrieving articles 20 in the specified quantity indicated by the article-specific order information included in multiple (two in this example) pieces of order information. For example, the first mount 11 loaded with articles 20(A) undergoes the picking operations associated with the article-specific order information with the row number 1 in the order information (00001) (the article-specific order information with the serial row number 1) and the picking operations associated with the article-specific order information with the row number 1 in the order information (00002) (the article-specific order information with the serial row number 4). Thus, as shown in Fig. 3, two articles 20(A) retrieved from the first mount 11 having the articles 20(A) are loaded onto the second mount 12 corresponding to the article-specific order information with the serial row number 1. One article 20(A) retrieved from the first mount 11 having the articles 20(A) is loaded onto the second mount 12 corresponding to the article-specific order information with the serial row number 4.

Similarly, three articles 20(B) retrieved from the first mount 11 having the articles 20(B) are loaded onto the second mount 12 corresponding to the article-specific order information with the serial row number 2. Two articles 20(B) retrieved from the first mount 11 having the articles 20(B) are loaded onto the second mount 12 corresponding to the article-specific order information with the serial row number 5. One article 20(C) retrieved from the first mount 11 having the articles 20(C) is loaded onto the second mount 12 corresponding to the article-specific order information with the serial row number 3.

A second mount 12 associated with a piece of order information loaded with articles 20 in the picking operations is stored in the consolidation apparatus 3 until the loading is complete for all the second mounts 12 associated with the above piece of order information. The second mount 12 is then transported from the consolidation apparatus 3 into the consolidation area 4 together with all the other second mounts 12 associated the above piece of order information. In Fig. 3, all the second mounts 12 associated with the order information (00001), or specifically, the second mount 12 loaded with two articles 20(A), the second mount 12 loaded with three articles 20(B), and the second mount 12 loaded with one article 20(C), are transported into the consolidation area 4. All the second mounts 12 associated with the order information (00002), or specifically, the second mount 12 loaded with one article 20(A) and the second mount 12 loaded with two articles 20(B), are also transported into the consolidation area 4.

A total of six articles 20 loaded on three second mounts 12 associated with the order information (00001) in the consolidation operation are collected onto the third mount 13 corresponding to the order information (00001) (the upper third mount 13 at the right end of Fig. 3). A total of three articles 20 loaded on two second mounts 12 associated with the order information (00002) in the consolidation operation are collected onto the third mount 13 corresponding to the order information (00002) (the lower third mount 13 at the right end of Fig. 3).

For simplicity, the article shipment system 100 performs the picking operations associated with two pieces of order information simultaneously in this example. In the present embodiment, the article shipment system 100 performs the picking operations associated with multiple pieces of order information included in a single batch simultaneously. More specifically, the picking operations are performed simultaneously for articles 20 of the same type included in multiple pieces of order information when the first mount 11 loaded with the articles 20 of the type is transported into the picking area 2. However, too many pieces of article-specific order information included in a single batch may cause a shortage of space for temporarily storing the second mounts 12 (the storage space in the consolidation apparatus 3 in the present embodiment).

Thus, when the number of pieces of article-specific order information included in a single batch is greater than a first set value, the article shipment system 100 according to the present embodiment restructures the batch (in other words, divides the batch into multiple sub-batches) to cause the number of pieces of article-specific order information included in a single batch to be less than or equal to the first set value. The article shipment system 100 simultaneously performs the picking operations associated with multiple pieces of order information included in a single batch after the restructuring. In the example shown in Fig. 2, the first set value may be 3000, and the batch may be restructured in order from the top (from the smallest serial row number). In this case, a single batch after the restructuring includes the pieces of order information 00001 to 01000. In other words, a single batch after the restructuring includes 3000 pieces of article-specific order information with the serial row numbers 1 to 3000. The first set value may be changed as appropriate.

After the batch restructuring, multiple pieces of article-specific order information included in a single piece of order information are included in the same batch. With a first set value of 2999 in the example shown in Fig. 2, a single batch after the restructuring includes 2998 pieces of article-specific order information with the serial row numbers 1 to 2998, instead of 2999 pieces of article-specific order information with the serial row numbers 1 to 2999.

The control system 5 assigns each of multiple pieces of article-specific order information included in multiple pieces of order information (in this example, multiple pieces of order information included in a single batch) to any of the first mounts 11 stored in the automated warehouse 1, and provides the transfer command to the automated warehouse 1 to transfer the first mount 11 from the automated warehouse 1. In the picking area 2, the first mount 11 undergoes the picking operations (specifically, the retrieval of articles 20 of the specified types and the specified quantities) associated with one or more pieces of article-specific order information assigned to the first mount 11.

Basically, the article-specific order information is assigned to the minimum number of first mounts 11. For example, when the automated warehouse 1 stores a first mount 11 loaded with articles 20 of a specified type in a quantity greater than or equal to the quantity involved in the picking operations associated with multiple pieces of order information, all pieces of article-specific order information specifying the specified type are assigned to this first mount 11. When the automated warehouse 1 does not store a first mount 11 loaded with articles 20 of a specified type in a quantity greater than or equal to the quantity involved in the picking operations associated with multiple pieces of order information, the multiple pieces of article-specific order information specifying the specified type are assigned across multiple first mounts 11 loaded with articles 20 in a total quantity of greater than or equal to the quantity involved in the picking operations.

When the picking operations associated with multiple pieces of order information (specifically, multiple pieces of order information included in a single batch) are performed simultaneously, a long wait time may occur before the loading is complete for all the second mounts 12 associated with a single piece of order information. This is likely to cause a shortage of space for temporarily storing the second mounts 12 (the storage space in the consolidation apparatus 3 in the present embodiment). In response to this, the first mounts 11 as the targets of the transfer command provided from the article shipment system 100 to the automated warehouse 1 are limited to the first mounts 11 (target mounts described later) loaded with articles 20 of the types included in part of the multiple pieces of order information. This facilitates the completion of loading on the second mounts 12 associated with part of the multiple pieces of order information, as compared with a structure without such limitation. This reduces the space to be used for temporarily storing the second mounts 12.

The part of the multiple pieces of order information described above is selected to, for example, cause the number of pieces of article-specific order information included in the part of the multiple pieces of order information to be less than or equal to a second set value. The second set value is less than the first set value described above. In the example shown in Fig. 2, the second set value may be 1000, and part of the multiple pieces of order information may be selected in order from the top (from the smallest serial row number). In this case, the pieces of order information 00001 to 00300 are selected as part of the multiple pieces of order information. When the second set value is 999 and the pieces of order information 00001 to 00300 are selected, the number of pieces of article-specific order information included in these pieces of order information is 1000. In this case, the pieces of order information 00001 to 00299 are selected as part of the multiple pieces of order information. The second set value may be changed as appropriate.

An example situation will now be described using the example shown in Fig. 2. In this example, the first set value is 3000, and the pieces of order information 00001 to 01000 are included in a single batch. The second set value is 1000, and the pieces of order information 00001 to 00300 are selected as part of the multiple pieces of order information. The pieces of order information 00001 to 01000 include six types of articles 20, A to F. The pieces of order information 00001 to 00300 include four types of articles 20, A to D, without including two types of articles 20, E and F.

In this situation, the first mounts 11 as the targets of the transfer command provided to the automated warehouse 1 are limited to the first mounts 11 (target mounts) loaded with articles 20 of the types included in part of the multiple pieces of order information. Thus, the types of articles 20 transported into the picking area 2 are not the six types A to F and are limited to the four types A to D. This facilitates the completion of loading on the second mounts 12 associated with part of the multiple pieces of order information, or specifically, the pieces of order information 00001 to 00300.

A group of pieces of article-specific order information included in part of the multiple pieces of order information, among the pieces of article-specific order information included in the multiple pieces of order information, is referred to as a target article-specific order information group. The first mounts 11 loaded with articles 20 of the specified types included in the target article-specific order information group are referred to as target mounts. As described above, the first mounts 11 as the targets of the transfer command provided from the article shipment system 100 to the automated warehouse 1 are limited to the target mounts. Such limitation can be continued until a limitation removal condition for removing the limitation is satisfied. The limitation removal condition is, for example, that the number of remaining target mounts for which the transfer command has not been provided reaches zero, or may be other than such a condition.

For example, the limitation removal condition may be that the number of remaining target mounts for which the transfer command has not been provided is less than or equal to a set value. The limitation removal condition may be based on the number of pieces of order information for which the loading is complete for all the second mounts 12. In this case, for example, the limitation removal condition may be that the number of pieces of order information for which the loading is complete for all the second mounts 12 is greater than or equal to a set value, or may be that the ratio of the number of pieces of order information for which the loading is complete for all the second mounts 12 (to the total number of pieces of order information) is greater than or equal to a set value. The limitation removal condition may be based on the time elapsed from the start of the limitation. For example, the limitation removal condition may be that the elapsed time reaches a set value.

When the first mounts 11 with high picking workloads (described later) are consecutively transferred from the automated warehouse 1, the first mounts 11 each take a long picking time, which may restrict the transfer of subsequent first mounts 11 into the picking area 2. When the first mounts 11 with low picking workloads are consecutively transferred from the automated warehouse 1, the first mounts 11 each take a short picking time, which may cause the picking area 2 to wait for subsequent first mounts 11 to be transferred into the picking area 2, or may cause congestion in the transport path for the first mounts 11 from the picking area 2 (the transport path of the second transporter 32 for the first mounts 11 in the present embodiment).

In response to this, the control system 5 alternately provides, to the automated warehouse 1, the transfer command to transfer a target mount with a higher picking workload from the automated warehouse 1 and the transfer command to transfer a target mount with a lower picking workload from the automated warehouse 1 to transport the multiple first mounts 11 to the picking area 2. **In** other words, an article shipment method according to one or more embodiments of the present invention includes a transfer command process for alternately providing, to the automated warehouse 1, the transfer command to transfer a target mount with a higher picking workload from the automated warehouse 1 and the transfer command to transfer a target mount with a lower picking workload from the automated warehouse 1. An article shipment program according to one or more embodiments of the present invention causes a computer to perform a transfer command function for alternately providing, to the automated warehouse 1, the transfer command to transfer a target mount with a higher picking workload from the automated warehouse 1 and the transfer command to transfer a target mount with a lower picking workload from the automated warehouse 1.

As described above, for a particular structure of the automated warehouse 1, the first mounts 11 may be transferred from the automated warehouse 1 in an order that is not exactly the same as the order in which the transfer commands for the first mounts 11 are provided. In this case, however, the first mounts 11 are transferred from the automated warehouse 1 substantially in the same order as the order in which the transfer commands for the first mounts 11 are provided. Thus, the control system 5 alternately provides the transfer command to transfer a target mount with a higher picking workload and the transfer command to transfer a target mount with a lower picking workload as described above. This allows the multiple first mounts 11 to arrive in the picking area 2 substantially in an alternating order of a first mount 11 with a higher picking workload and a first mount 11 with a lower picking workload.

In the present embodiment, the control system 5 alternately provides the transfer command to transfer a target mount with the highest picking workload among the remaining target mounts for which the transfer command has not been provided and the transfer command to transfer a target mount with the lowest picking workload among the remaining target mounts for which the transfer command has not been provided. The control system 5 can thus alternately provide the transfer command to transfer a target mount with a higher picking workload and the transfer command to transfer a target mount with a lower picking workload. For N target mounts (N is a natural number), the control system 5 provides the transfer commands to transfer the N target mounts in an order based on the descending or ascending order of picking workload, or specifically, in the order of the 1st target mount, the N-th target mount, the 2nd target mount, the (N - 1)th target mount, the 3rd target mount, the (N - 2)th target mount, ....

As in the example shown in Fig. 4, four target mounts may be used (N = 4). In Fig. 4, the mount number identifies the target mount (first mount 11). The picking workload indicates the picking workload for each target mount. In the example shown in Fig. 4, the control system 5 provides the transfer commands to transfer the target mounts in the order indicated by the transfer command order, or specifically, in the order of the target mount with the mount number 2, the target mount with the mount number 3, the target mount with the mount number 1, and the target mount with the mount number 4. In some embodiments of the present invention, the control system 5 may provide the transfer commands to transfer the target mounts in the order of the target mount with the mount number 3, the target mount with the mount number 2, the target mount with the mount number 4, and the target mount with the mount number 1.

The above picking workload refers to the workload for retrieving, from a first mount 11, articles 20 in the specified quantities indicated by pieces of article-specific order information included in multiple pieces of order information in the picking operations (the workload involved in the retrieval of such articles 20). In other words, the picking workload is set for each first mount 11. In the example shown in Fig. 3, the first mount 11 loaded with articles 20(A) undergoes the retrieval of articles 20 in the specified quantities indicated by pieces of article-specific order information (the article-specific order information indicating the specified type A) included in two pieces of order information, or specifically, the order information (00001) and the order information (00002) (refer to Fig. 2). Thus, the picking workload for this first mount 11 is the workload for retrieving articles 20 in the specified quantity (two in this example) indicated by the article-specific order information with the serial row number 1 and retrieving articles 20 in the specified quantity (one in this example) indicated by the article-specific order information with the serial row number 4.

In the present embodiment, the picking workload is set based on the count of picking (the count of picking strokes) for retrieving, from the first mount 11, articles 20 in the specified quantities indicated by pieces of article-specific order information included in multiple pieces of order information. In other words, an article shipment method according to one or more embodiments of the present invention includes a picking workload setting process for setting the picking workload based on the count of picking. An article shipment program according to one or more embodiments of the present invention causes a computer to perform a picking workload setting function for setting the picking workload based on the count of picking. In the present embodiment, the picking workload is set to a value equal to the count of picking.

A method for setting the picking workload based on the count of picking will now be described with reference to Fig. 4. Fig. 4 shows pieces of article-specific order information assigned to the respective four first mounts 11. In Fig. 4, the type indicates the specified type. The quantity indicates the specified quantity. For the first mount 11 with the mount number 1, articles 20 of the specified type and the specified quantities indicated by two pieces of article-specific order information are retrieved. For the first mount 11 with the mount number 2, articles 20 of the specified type and the specified quantities indicated by three pieces of article-specific order information are retrieved. For each of the first mount 11 with the mount number 3 and the first mount 11 with the mount number 4, articles 20 of the specified type and the specified quantity indicated by one piece of article-specific order information are retrieved. In the present embodiment, for a first mount 11 assigned with multiple pieces of article-specific order information, the sum of the picking workloads that are set for the respective pieces of article-specific order information (the order-specific workload in Fig. 4) is set as the picking workload.

In Fig. 4, the quantity of articles 20 that can be retrieved from the first mount 11 per count of picking (specifically, per stroke) is 5. The count of picking is thus a value obtained by dividing the specified quantity by 5 and rounding up the resulting value to an integer. For the first piece of article-specific order information assigned to the first mount 11 with the mount number 1, for example, 22 is divided by 5 to produce 4.4, which is rounded up to an integer 5. The value 5 is the count of picking. A value corresponding to 5 (a value equal to 5 in Fig. 4) is set as the workload for this piece of article-specific order information (order-specific workload). For the second piece of article-specific order information assigned to the first mount 11 with the mount number 1, 11 is divided by 5 to produce 2.2, which is rounded up to an integer 3. The value 3 is the count of picking. A value corresponding to 3 (a value equal to 3 in Fig. 4) is set as the workload for this piece of article-specific order information (order-specific workload). In Fig. 4, the sum of 5 and 3, or specifically 8, is set as the picking workload for the first mount 11 with the mount number 1.

The quantity of articles 20 that can be retrieved from the first mount 11 per count of picking may vary with factors such as the weight of articles 20, the shape of articles 20, the agent of the picking operations (for example, an operator or a robot), or the characteristics of the agent of the picking operations (for example, whether the operator is inexperienced). The picking workload may thus be set using a value reflecting at least one of these factors as the quantity of articles 20 that can be retrieved from the first mount 11 per count of picking. The picking workload may be set to a value obtained by multiplying the count of picking by a coefficient reflecting at least one of the above factors.

In the present embodiment, as shown in Fig. 5, the picking area 2 includes multiple workstations ST in which the picking operations are performed. In this example, the picking area 2 includes four workstations ST, or specifically, a first workstation ST1, a second workstation ST2, a third workstation ST3, and a fourth workstation ST4. To allow first mounts 11 to be transported to the multiple workstations ST, the transport path of the first transporter 31 for the first mounts 11 is divided into multiple branch paths in a downstream portion of the transport path. Each branch path extends to the corresponding workstation ST.

The control system 5 assigns the destination of a first mount 11 to any of the multiple workstations ST to transport the first mount 11 to the picking area 2. In other words, an article shipment method according to one or more embodiments of the present invention includes a first mount assignment process for assigning the destination of a first mount 11 to any of the multiple workstations ST. An article shipment program according to one or more embodiments of the present invention causes a computer to perform a first mount assignment function for assigning the destination of a first mount 11 to any of the multiple workstations ST.

The article shipment system 100 performs the picking operations in the picking area 2, followed by the consolidation operation. Thus, the first mount 11 transferred from the automated warehouse 1 may be assigned to any of the workstations ST. Multiple first mounts 11 associated with the same piece of order information are not to be assigned to a single workstation ST. The work progress in each workstation ST changes constantly.

In the present embodiment, the control system 5 thus assigns the destination of a first mount 11 to any of the workstations ST at the timing at which the first mount 11 is transported into the picking area 2. More specifically, as shown in Fig. 5, a reader 40 that reads identification information of each first mount 11 is disposed upstream from the positions at which the multiple branch paths are branched from the transport path of the first transporter 31 for the first mounts 11. The reader 40 is, for example, a barcode reader that reads a barcode on each first mount 11. The control system 5 assigns the destination of a first mount 11 to any of the workstations ST at the timing at which the reader 40 reads the identification information of the first mount 11.

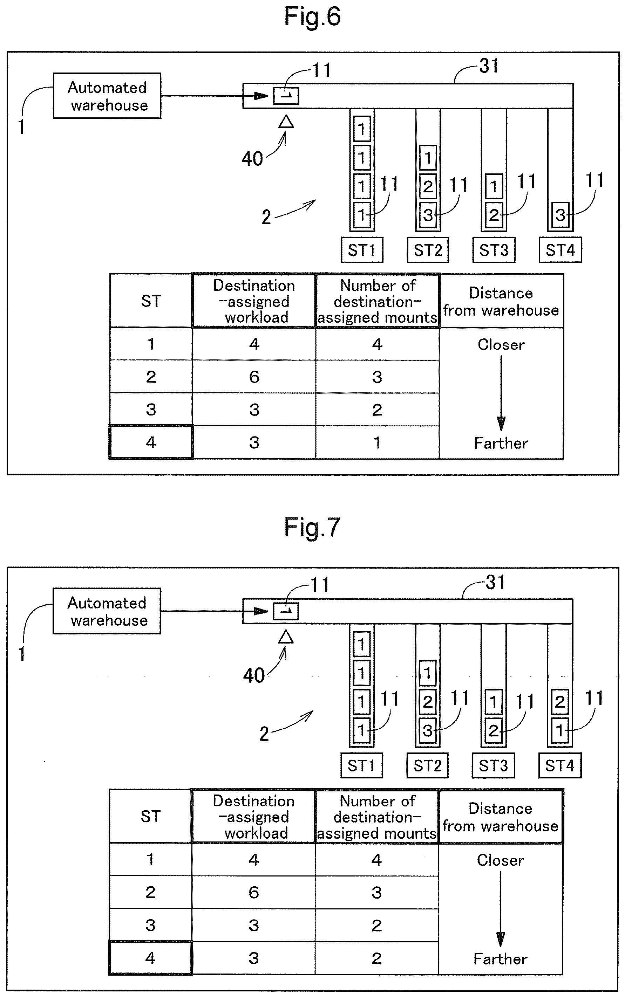

A first mount 11 having the destination assigned to any of the multiple workstations ST is referred to as a destination-assigned mount. In Fig. 5 and in Figs. 6 and 7 (referred to later), the first mounts 11 disposed on the branch path extending to each workstation ST are destination-assigned mounts in the workstation ST. In the situation shown in Fig. 5, for example, four first mounts 11 are assigned to the first workstation ST1. The total number of destination-assigned mounts assigned to the first workstation ST1 is 4.

The table in each of Figs. 5 to 7 shows, in the column of the number of destination-assigned mounts, the number of destination-assigned mounts in each workstation ST in the illustrated situation. The control system 5 manages the total number of destination-assigned mounts in each workstation ST. Upon completion of the picking operations associated with all pieces of article-specific order information assigned to one destination-assigned mount in a workstation ST, the control system 5 decrements, by 1, the total number of destination-assigned mounts in the workstation ST. When the picking operations are performed by an operator, the determination of completion of the picking operations is performed in response to, for example, the operator's operation (for example, pressing a button switch or operating a monitor display screen). The same applies to the determination of completion of the picking operations associated with the article-specific order information described below. When a first mount 11 is newly assigned to a workstation ST, the control system 5 increments the total number of destination-assigned mounts in the workstation ST by 1.

The table in each of Figs. 5 to 7 shows, in the column of the destination-assigned workload, a destination-assigned workload in each workstation ST in the illustrated situation. The destination-assigned workload is the sum of the picking workloads associated with the pieces of article-specific order information for which the picking operations are incomplete for all the destination-assigned mounts. In Figs. 5 to 7, each square representing a first mount 11 encloses an incomplete-picking workload for the first mount 11 (specifically, the picking workload associated with the pieces of article-specific order information for which the picking operations are incomplete). In the situation shown in Fig. 5, for example, each of the four first mounts 11 assigned to the first workstation ST1 has the incomplete-picking workload of 1. Thus, the destination-assigned workload in the first workstation ST1 is 4 (= 1 + 1 + 1 + 1).

The control system 5 manages the destination-assigned workload in each workstation ST. When the picking operations associated with a single piece of article-specific order information are complete in a workstation ST, the control system 5 decrements the destination-assigned workload in the workstation ST by the picking workload (order-specific workload) that is set for the piece of article-specific order information. For example, when the first mount 11 with the mount number 1 is the destination-assigned mount in Fig. 4, the destination-assigned workload in the workstation ST is decremented by 5 upon completion of the picking operations associated with the piece of article-specific order information indicating the order-specific workload of 5.

In the present embodiment, the completion of the picking operations associated with the article-specific order information is determined for each piece of article-specific order information. In some embodiments of the present invention, the completion of the picking operations associated with the article-specific order information may be determined for each set of multiple pieces of article-specific order information assigned to a single first mount 11. In this case, upon completion of the picking operations associated with all pieces of article-specific order information assigned to a single destination-assigned mount, the destination-assigned workload in the workstation ST is decremented by the picking workload that is set for the destination-assigned mount. For example, when the first mount 11 with the mount number 1 is the destination-assigned mount in Fig. 4, the destination-assigned workload in the workstation ST is decremented by 8 upon completion of the picking operations associated with the two pieces of article-specific order information.

The table in each of Figs. 5 to 7 shows, in the column of the distance from the warehouse, the distance of each workstation ST from the automated warehouse 1 (the distance along the transport path of the first transporter 31 for the first mounts 11). In this example, the four workstations ST, or specifically, the first workstation ST1, the second workstation ST2, the third workstation ST3, and the fourth workstation ST4 are arranged in ascending order of distance from the automated warehouse 1.

A workstation ST, among the multiple workstations ST, with the minimum sum of the picking workloads associated with the pieces of article-specific order information for which the picking operations are incomplete for all the destination-assigned mounts is referred to as a minimum-workload station. In other words, the workstation ST with the minimum destination-assigned workload is referred to as a minimum-workload station. In the situation shown in Fig. 5, the third workstation ST3 is the minimum-workload station. In the situations shown in Figs. 6 and 7, the third workstation ST3 and the fourth workstation ST4 are the minimum-workload stations.

When the workstations ST include a single minimum-workload station, the control system 5 in the present embodiment assigns the destination of the first mount 11 to the single minimum-workload station. The workstations ST may include multiple minimum-workload stations. When the workstations ST include multiple minimum-workload stations, the control system 5 in the present embodiment assigns the destination of the first mount 11 to a workstation ST, among the multiple minimum-workload stations, with the minimum total number of destination-assigned mounts. In the situation shown in Fig. 5, the workstations ST include a single minimum-workload station. Thus, the destination of the first mount 11 with the identification information read by the reader 40 is assigned to the third workstation ST3 as the minimum-workload station. **In** the situation shown in Fig. 6, the workstations ST include two minimum-workload stations. Thus, the destination of the first mount 11 with the identification information read by the reader 40 is assigned to a workstation ST with the minimum total number of destination-assigned mounts among the multiple minimum-workload stations (the fourth workstation ST4 in this example).

As in the situation shown in Fig. 7, the workstations ST may include multiple minimum-workload stations, and the multiple minimum-workload stations may also include multiple workstations ST with the minimum total number of destination-assigned mounts. When the workstations ST include multiple minimum-workload stations and when the multiple minimum-workload stations include multiple workstations ST with the minimum total number of destination-assigned mounts, the control system 5 in the present embodiment assigns the destination of the first mount 11 to the workstation ST farthest from the automated warehouse 1, among the multiple minimum-workload stations with the minimum total number of destination-assigned mounts (the third workstation ST3 and the fourth workstation ST4 in Fig. 7). Thus, in the situation shown in Fig. 7, the destination of the first mount 11 with the identification information read by the reader 40 is assigned to the fourth workstation ST4.

In the present embodiment, the picking area 2 includes the multiple workstations ST in which the picking operations are performed. The control system 5 may thus change, based on the number of pieces of article-specific order information included in multiple pieces of order information, the number of target stations that are the workstations ST to which the destinations of the first mounts 11 are to be assigned. More specifically, for example, the control system 5 may increase the number of target stations for more pieces of article-specific order information included in multiple pieces of order information (for example, multiple pieces of order information included in a single batch). In other words, an article shipment method according to one or more embodiments of the present invention may include a target-station number change process for changing the number of target stations based on the number of pieces of article-specific order information included in multiple pieces of order information. An article shipment program according to one or more embodiments of the present invention may cause a computer to perform a target-station number change function for changing the number of target stations based on the number of pieces of article-specific order information included in multiple pieces of order information. In the examples shown in Figs. 5 to 7, the number of target stations is changed in the range of 1 to 4 based on the number of pieces of article-specific order information included in multiple pieces of order information. The number of target stations may be increased or decreased by one or two or more based on the number of pieces of article-specific order information included in multiple pieces of order information.

The following will describe other embodiments of the article shipment system according to the present invention.

In the above embodiments, the picking workload is set based on the count of picking for retrieving, from the first mount 11, articles 20 in the specified quantities indicated by pieces of article-specific order information included in multiple pieces of order information. However, the present invention is not limited to this structure. For example, the picking workload may be set based on the sum of the specified quantities indicated by pieces of article-specific order information included in multiple pieces of order information. For example, for the first mount 11 with the mount number 1 in Fig. 4, the picking workload may be set based on 33 (= 22 + 11), which is the sum of the specified quantities indicated by the two pieces of article-specific order information. The picking workload is set to, for example, a value equal to this sum.

In the above embodiments, when the workstations ST include a single minimum-workload station, the control system 5 assigns the destination of the first mount 11 to the single minimum-workload station. When the workstations ST include multiple minimum-workload stations, the control system 5 assigns the destination of the first mount 11 to a workstation ST with the minimum total number of destination-assigned mounts among the multiple minimum-workload stations. However, the present invention is not limited to this structure. For example, when the multiple workstations ST include a single minimum mount-number station that is a workstation ST with the minimum total number of destination-assigned mounts, the control system 5 may assign the destination of the first mount 11 to the single minimum mount-number station. When the multiple workstations ST include multiple minimum mount-number stations, the control system 5 may assign the destination of the first mount 11 to a workstation ST, among the multiple minimum mount-number stations, with the minimum sum of picking workloads associated with the pieces of article-specific order information for which the picking operations are incomplete for all the destination-assigned mounts. In other words, the first mount 11 may be assigned preferentially to a workstation with a smaller total number of destination-assigned mounts rather than a workstation with a lower destination-assigned workload, unlike in the above embodiments in which the first mount 11 is assigned preferentially to a workstation with a lower destination-assigned workload rather than a workstation with a smaller total number of destination-assigned mounts.

In the above embodiments, the picking area 2 includes the multiple workstations ST in which the picking operations are performed. However, the present invention is not limited to this structure. The picking area 2 may include a single workstation ST.

The structure described in each of the above embodiments may be combined with the structures described in other embodiments (including combinations of the other embodiments) unless any contradiction arises. For other structures as well, the embodiments described herein are merely illustrative in all aspects and may be modified variously as appropriate without departing from the spirit and scope of the present invention.

An overview of the article shipment system according to the embodiments of the present invention described above is provided below.

An article shipment system is an article shipment system for shipping articles of specified types and specified quantities based on order information. The specified types and the specified quantities are specified by the order information. The specified types are types of articles specified for each shipping destination. The specified quantities are each a quantity of articles specified for each of the specified types. The article shipment system includes an automated warehouse, a picking area, a consolidation area, and a control system. The automated warehouse stores a plurality of first mounts each loaded with a plurality of articles. The picking area is an area in which a picking operation is performed. The picking operation is an operation of retrieving, based on the order information, articles of specified types and specified quantities indicated by respective pieces of article-specific order information from the plurality of first mounts and loading the articles onto second mounts corresponding to the respective pieces of article-specific order information. Each of the pieces of article-specific order information is information about a single specified type and a specified quantity for the single specified type included in a single piece of order information. The consolidation area is an area in which a consolidation operation is performed. The consolidation operation is an operation of collecting, onto a third mount corresponding to a shipping destination, articles loaded on second mounts associated with all pieces of article-specific order information included in a single piece of order information. The control system controls the automated warehouse. The control system alternately provides, to the automated warehouse, a transfer command to transfer a target mount with a higher picking workload from the automated warehouse and a transfer command to transfer a target mount with a lower picking workload from the automated warehouse to transport the plurality of first mounts to the picking area. The picking workload is a workload for retrieving, from a first mount among the plurality of first mounts, articles in specified quantities indicated by pieces of article-specific order information included in a plurality of pieces of order information in the picking operation. The target mount is a first mount, among the plurality of first mounts, loaded with articles of a specified type included in a target article-specific order information group. The target article-specific order information group is a group of pieces of article-specific order information included in part of the plurality of pieces of order information among pieces of article-specific order information included in the plurality of pieces of order information.

In this structure, the control system alternately provides, to the automated warehouse, the transfer command to transfer a first mount with a higher picking workload from the automated warehouse and the transfer command to transfer a first mount with a lower picking workload from the automated warehouse to transport the multiple first mounts to the picking area. This allows the multiple first mounts to arrive in the picking area substantially in an alternating order of a first mount with a higher picking workload and a first mount with a lower picking workload. This can easily level the workloads over time in the picking area and improve the work efficiency in the picking area. With the multiple first mounts arriving in the picking area in the order described above, the number of first mounts transported from the picking area after completion of the picking operation can also be leveled over time. This can easily reduce congestion of the transport path for the first mounts (for example, a path for re-transfer into the automated warehouse).

In the above structure, the first mounts as the targets of the above alternating transfer commands provided to the automated warehouse are limited to the first mounts (target mounts) loaded with articles of the specified types included in the target article-specific order information group. The target article-specific order information group is a group of pieces of article-specific order information included in part of the multiple pieces of order information among the pieces of article-specific order information included in the multiple pieces of order information. Thus, the types of articles to be transported into the picking area in response to the above transfer commands can be limited to the specified types included in part of the multiple pieces of order information. This facilitates the completion of loading on the second mounts associated with part of the multiple pieces of order information, as compared with a structure without such limitation on the types of articles to be transported into the picking area. This reduces the space to be used for temporarily storing the second mounts.

The structure described above can perform the picking operations associated with multiple pieces of order information simultaneously using less space for temporarily storing the second mounts loaded with articles retrieved from the first mounts in the picking operations.

The picking area may include a plurality of workstations in which the picking operation is performed. The control system may assign a destination of a first mount among the plurality of first mounts to one of the plurality of workstations to transport the first mount to the picking area. The control system may assign, in response to the plurality of workstations including a single minimum-workload station, the destination of the first mount to the single minimum-workload station. The minimum-workload station is a workstation, among the plurality of workstations, with a minimum sum of picking workloads associated with pieces of article-specific order information for which the picking operation is incomplete for all destination-assigned mounts. Each of the destination-assigned mounts is a first mount, among the plurality of first mounts, having a destination assigned to a workstation among the plurality of workstations.

This structure facilitates the leveling of workloads across multiple workstations included in the picking area for the picking operation.

In the above structure, in response to the plurality of workstations including a plurality of the minimum-workload stations, the control system may assign the destination of the first mount to a workstation, among the plurality of minimum-workload stations, with a minimum total number of destination-assigned mounts.

This structure can determine the destination of the first mount to reduce imbalance in the total number of destination-assigned mounts across multiple minimum-workload stations.

In the above structure, in response to the plurality of workstations including a plurality of the minimum-workload stations and in response to the plurality of minimum-workload stations including a plurality of workstations with a minimum total number of destination-assigned mounts, the control system may assign the destination of the first mount to a workstation farthest from the automated warehouse among the plurality of minimum-workload stations with the minimum total number of destination-assigned mounts.

Any congestion of the transport path with first mounts being transported to a workstation closer to the automated warehouse may affect first mounts being transported to a workstation farther from the automated warehouse. The above structure can determine the destination of the first mount to reduce such effects of congestion when the multiple minimum-workload stations include multiple workstations each with the minimum total number of destination-assigned mounts.

The picking area may include a plurality of workstations in which the picking operation is performed. The control system may change a number of target stations based on a number of pieces of article-specific order information included in the plurality of pieces of order information to increase the number of target stations for more pieces of article-specific order information included in the plurality of pieces of order information. Each of the target stations is a workstation, among the plurality of workstations, to which the destination of the first mount is to be assigned.

This structure can easily improve the work efficiency in each of multiple workstations included in the picking area.

The picking workload may be set based on a count of picking for retrieving, from the first mount, articles in the specified quantities indicated by the pieces of article-specific order information included in the plurality of pieces of order information.

This structure can appropriately set the picking workload for each target mount based on the count of picking.

The article shipment system according to one or more embodiments of the present disclosure produces at least one of the effects described above.

### REFERENCE SIGNS

- 1: automated warehouse
- 2: picking area
- 3: consolidation apparatus
- 4: consolidation area
- 5: control system
- 11: first mount
- 12: second mount
- 13: third mount
- 20: article
- 20(A): article with type A
- 20(B): article with type B
- 20(C): article with type C
- 31: first transporter
- 32: second transporter
- 33: third transporter
- 34: fourth transporter
- 40: reader
- 100: article shipment system

- ST: workstation
- ST1: first workstation
- ST2: second workstation
- ST3: third workstation
- ST4: fourth workstation

## Claims

1. An article shipment system (100) for shipping articles (20) of specified types and specified quantities based on order information, the specified types and the specified quantities being specified by the order information, the specified types being types of articles (20) specified for each shipping destination, the specified quantities each being a quantity of articles (20) specified for each of the specified types,
the article shipment system (100) being **characterized by** comprising:
an automated warehouse (1) configured to store a plurality of first mounts (11) each loaded with a plurality of articles (20);
a picking area (2) in which a picking operation is performed, the picking operation being an operation of retrieving, based on the order information, articles (20) of specified types and specified quantities indicated by respective pieces of article-specific order information from the plurality of first mounts (11) and loading the articles (20) onto second mounts (12) corresponding to the respective pieces of article-specific order information, each of the pieces of article-specific order information being information about a single specified type and a specified quantity for the single specified type included in a single piece of order information;
a consolidation area (4) in which a consolidation operation is performed, the consolidation operation being an operation of collecting, onto a third mount (13) corresponding to a shipping destination, articles (20) loaded on second mounts (12) associated with all pieces of article-specific order information included in a single piece of order information; and
a control system (5) configured to control the automated warehouse (1),
the control system (5) being configured to alternately provide, to the automated warehouse (1), a transfer command to transfer a target mount with a higher picking workload from the automated warehouse (1) and a transfer command to transfer a target mount with a lower picking workload from the automated warehouse (1) to transport the plurality of first mounts (11) to the picking area (2), the picking workload being a workload for retrieving, from a first mount (11) among the plurality of first mounts (11), articles (20) in specified quantities indicated by pieces of article-specific order information included in a plurality of pieces of order information in the picking operation, the target mount being a first mount (11), among the plurality of first mounts (11), loaded with articles (20) of a specified type included in a target article-specific order information group, the target article-specific order information group being a group of pieces of article-specific order information included in part of the plurality of pieces of order information among pieces of article-specific order information included in the plurality of pieces of order information.

2. The article shipment system (100) according to claim 1, wherein
the picking area (2) includes a plurality of workstations (ST) in which the picking operation is performed,
the control system (5) assigns a destination of a first mount (11) among the plurality of first mounts (11) to one of the plurality of workstations (ST) to transport the first mount (11) to the picking area (2), and
the control system (5) assigns, in response to the plurality of workstations (ST) including a single minimum-workload station, the destination of the first mount (11) to the single minimum-workload station, the minimum-workload station is a workstation (ST), among the plurality of workstations (ST), with a minimum sum of picking workloads associated with pieces of article-specific order information for which the picking operation is incomplete for all destination-assigned mounts, and each of the destination-assigned mounts is a first mount (11), among the plurality of first mounts (11), having a destination assigned to a workstation (ST) among the plurality of workstations (ST).

3. The article shipment system (100) according to claim 2, wherein
in response to the plurality of workstations (ST) including a plurality of the minimum-workload stations, the control system (5) assigns the destination of the first mount (11) to a workstation (ST), among the plurality of minimum-workload stations, with a minimum total number of destination-assigned mounts.

4. The article shipment system (100) according to claim 3, wherein
in response to the plurality of workstations (ST) including a plurality of the minimum-workload stations and in response to the plurality of minimum-workload stations including a plurality of workstations (ST) with a minimum total number of destination-assigned mounts, the control system (5) assigns the destination of the first mount (11) to a workstation (ST) farthest from the automated warehouse (1) among the plurality of minimum-workload stations with the minimum total number of destination-assigned mounts.

5. The article shipment system (100) according to claim 1, wherein
the picking area (2) includes a plurality of workstations (ST) in which the picking operation is performed, and
the control system (5) changes a number of target stations based on a number of pieces of article-specific order information included in the plurality of pieces of order information to increase the number of target stations for more pieces of article-specific order information included in the plurality of pieces of order information, and each of the target stations is a workstation (ST), among the plurality of workstations (ST), to which the destination of the first mount (11) is to be assigned.

6. The article shipment system (100) according to any one of claims 1 to 5, wherein
the picking workload is set based on a count of picking for retrieving, from the first mount (11), articles (20) in the specified quantities indicated by the pieces of article-specific order information included in the plurality of pieces of order information.
